# FASCICULE DE BREVET EUROPEEN

(11) **EP 2 045 184 B1**
(45) Date de publication et mention de la délivrance du brevet: **07.04.2010**
(21) Numéro de dépôt: 08165512.8
(22) Date de dépôt: 30.09.2008
(51) Int. Cl.: B63H 5/125, B63H 23/32, F16C 11/06

(54) **Propulseur en nacelle pour navire**
Verkleidetes Triebwerk für Schiff
Propeller in a nacelle for a ship

(30) Priorité: 01.10.2007 FR 0757977
(43) Date de publication de la demande: 08.04.2009
(73) Titulaire: Converteam Technology Ltd, Rugby Warwickshire CV21 1BU (GB)
(72) Inventeur: Julliand, Lionel, 90000 Beaucourt (FR)
(74) Mandataire: Blot, Philippe Robert Emile

(56) Documents cités:
- WO-A-99/19648
- FR-A- 2 224 667
- FR-A- 2 835 804
- US-A- 4 005 916
- US-A1- 2006 189 223

## Description

La présente invention concerne un propulseur en nacelle pour navire, et plus particulièrement une tel propulseur comprenant une ligne d'arbre supportée par un premier et un deuxième paliers, une hélice montée à l'extrémité dudit arbre située du côté du premier palier, et des moyens d'entraînement disposés pour entraîner la ligne d'arbre entre le premier et le deuxième paliers.

Un tel propulseur est décrit dans le document US 2006/189223.

On connaît le principe des propulseurs en nacelle, ou POD, pour navire. Un moteur électrique, sa ligne d'arbre et l'hélice qu'elle supporte sont suspendus sous la coque du navire dans une nacelle étanche. L'ensemble est orientable autour d'un axe vertical de manière à assurer la propulsion et la direction du navire.

Les lignes d'arbres des propulseurs en nacelle et leurs paliers de support assurent les fonctions de guidage et de butée permettant de reprendre les efforts hydrauliques qui s'appliquent sur l'hélice ainsi que les poids des différents composants de la chaîne cinématique. Les propulseurs en nacelle sont actuellement équipés de paliers dont la fonction butée est assurée par des roulements à rouleau coniques du coté opposé à l'hélice.

La mesure des efforts radiaux sur ces paliers est difficile à obtenir, ce qui nuit à l'appréhension des efforts en mer sur l'hélice, notamment en giration.

L'invention a pour but de fournir un propulseur en nacelle qui permet une mesure des efforts des efforts axiaux et radiaux en continu sur la butée.

A cet effet, l'invention a tout d'abord pour objet un propulseur en nacelle pour navire, comprenant une ligne d'arbre supportée par un premier et un deuxième paliers, une hélice montée à l'extrémité dudit arbre située du côté du premier palier, et des moyens d'entraînement disposés pour entraîner la ligne d'arbre entre le premier et le deuxième paliers, propulseur dans lequel ledit premier palier est un palier lisse biconique, hydrostatique au moins à faible vitesse.

Les paliers hydrostatiques sont connus dans la technique. Un fluide hydraulique est injecté sous pression entre un arbre et un palier de support, de manière à "soulever" l'arbre du palier à vitesse faible ou nulle. Au-dessus d'une certaine vitesse ces paliers deviennent généralement hydrodynamiques.

L'invention vise aussi bien les POD à hélice conventionnels que les propulseurs à pompe hélice du type décrit dans le document FR-A-2869586.

On observera que le document FR-A-2835804 décrit un propulseur en nacelle dans lequel le système de pivoterie comprend un pivot biconique avec une circulation d'eau entre le pivot et les flasques de pivotement. II ne s'agit toutefois pas du montage de la ligne d'arbre du moteur, mais de la nacelle elle-même, autour donc d'un axe perpendiculaire à celui de l'invention. Les vitesses de rotation concernées sont en outre sans commune mesure.

Dans un mode de réalisation particulier, ledit premier palier est un palier biconique en "citron" (soit du type <>, par opposition aux paliers en "diabolo", du type ><).

Ce type de palier présente l'avantage de certaines caractéristiques des liaisons à rotule. Le palier est donc moins sensible aux déflexions de ligne d'arbre et de la structure de support.

Plus particulièrement, ladite ligne d'arbre peut former, dans la zone dudit premier palier, une partie de diamètre élargi raccordée au reste de l'arbre par deux troncs de cône de sommets opposés, chaque tronc de cône étant agencé pour coopérer avec une butée de forme correspondante dans laquelle sont réalisés des alvéoles formant chambres de pression, ouverts en regard des surfaces respectives de l'arbre, et raccordés à des moyens de circulation de fluide hydraulique.

Au moins une des butées peut être réalisée en une pluralité de segments démontables.

Lesdits segments peuvent être maintenus assemblés à l'aide d'un flasque d'extrémité d'un carter de palier.

Egalement dans un mode de réalisation particulier, le deuxième palier est un palier lisse rotulé.

Plus particulièrement, ledit deuxième palier peut être un palier hydrostatique, au moins à faible vitesse.

L'invention a également pour objet un navire muni d'au moins un propulseur tel que décrit ci-dessus.

Dans un mode de réalisation particulier, l'hélice est montée à l'arrière de la ligne d'arbre dans le sens de marche normal.

Dans ce cas, la butée de marche avant est accessible et démontable depuis l'intérieur de la nacelle.

On décrira maintenant, à titre d'exemple non limitatif, un mode de réalisation particulier de l'invention, en référence aux dessins schématiques annexés dans lesquels :
- la figure 1 est une vue de côté partiellement en coupe d'un propulseur en nacelle selon l'invention ; et
- la figure 2 est une vue en coupe à plus grande échelle du détail 2 de la figure 1.

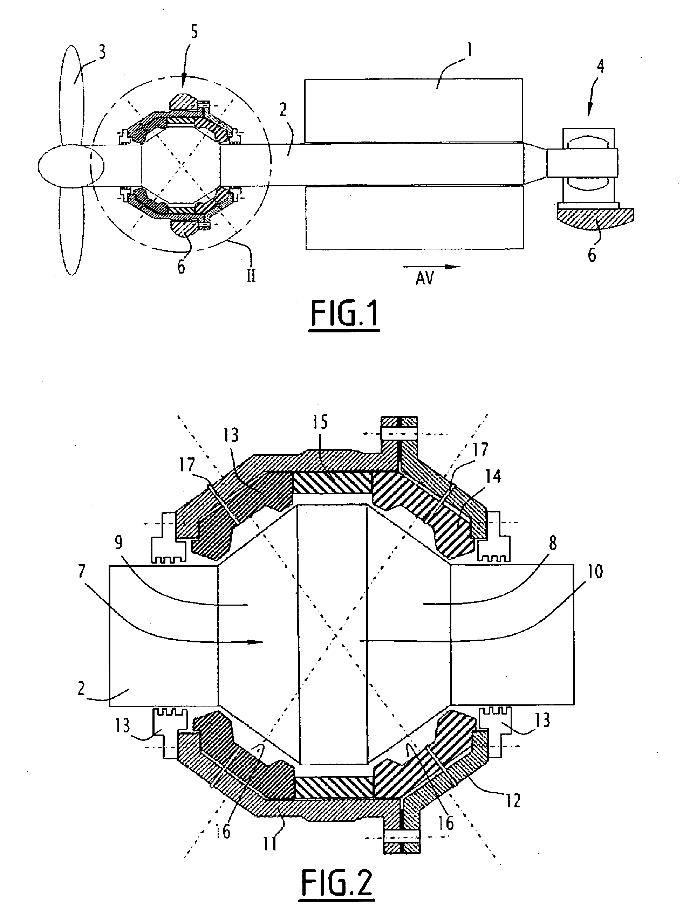

On voit à la figure 1 un moteur électrique 1 agencé pour entraîner un arbre 2 sur lequel est montée une hélice 3 d'un navire. L'arbre 2 est monté dans un palier avant 4 à l'opposé de l'hélice 3 et un palier arrière 5 du côté de l'hélice, les termes avant et arrière se référant au sens de marche normal du navire, illustré par la flèche AV. Le moteur 1 est installé entre les paliers 4 et 5.

Les paliers 4 et 5 sont fixés à la structure 6 d'une nacelle de propulsion du navire. Une telle nacelle et ses moyens de suspension et d'orientation sur la coque du navire sont bien connus. Ils ne seront donc pas décrits plus en détail.

Le palier 4 est de type palier lisse rotulé à soulèvement hydrostatique. Le corps de palier est démontable au niveau du plan de joint de l'arbre et son coussinet peut être démonté de l'intérieur de la nacelle.

Le palier 5 est constitué d'un renflement 7 de l'arbre 2 d'une part, et de parties fixes de support d'autre part.

Le renflement 7 est formé de deux portées tronconiques, une avant 8 dont le sommet est dirigé vers l'avant, et une arrière 9 dont le sommet est dirigé vers l'arrière. Une partie centrale 10 cylindrique de diamètre maximal est formée entre les portées tronconiques 8 et 9.

Les parties fixes, constituant le palier proprement dit, comprennent un carter 11 fermé à l'avant par un flasque d'extrémité 12 délimitant une chambre logeant le renflement 7 et rendue étanche à l'aide de deux joints d'étanchéité 13 enserrant l'arbre 2. Le fond du carter 11 reçoit, du côté arrière, une butée annulaire 14, et une autre butée annulaire 15 est bloquée du côté avant par le flasque 12. Une entretoise annulaire 15 sépare les butées 13 et 14.

Des alvéoles 16 sont formés dans les butées 13 et 14 en regard des portées 8 et 9 de l'arbre 2. Des conduits 17 dans les parois du carter 11, du flasque 12 et des butées 13 et 14 permettent d'amener du fluide hydraulique sous pression dans les alvéoles 16 qui forment ainsi des chambres de pression.

La géométrie des chambres 16 permet sur chacune une fuite de débit. Le film de fluide hydraulique crée entre chaque chambre et le renflement 7 un palier hydrostatique dont la rigidité est fonction de l'épaisseur du film d'huile.

Il en résulte que le palier 5 est auto centrant. En effet, plus l'effort en regard d'une chambre est important, plus le film de fluide hydraulique se réduit et plus la pression monte dans la chambre. A l'opposé, dans le même temps, la pression dans la chambre en regard de l'autre coté du palier aura diminué, ce qui permet de recentrer le renflement 7.

Compte tenu de la forme en "citron" des surfaces fonctionnelles du renflement 7, il est possible d'ajuster les centres de poussée pour obtenir un palier rotulé.

La lubrification du palier 5 est obtenue grâce à une lubrification forcée de l'ensemble des chambres 16. Cette solution permet d'assurer à très basse vitesse un soulèvement de l'arbre et autorise les marches continues à basse vitesse.

II est à noter que pour une hélice en position de pousser la nacelle, la butée 14 de marche avant est située vers l'intérieur du propulseur. En conséquence, l'inspection de cette butée avant est possible de l'intérieur de la nacelle avec un démontage des étanchéités appropriées.

Les chambres 16 de cette butée sont segmentées de sorte que le démontage et le changement de ces chambres est possible par l'intérieur du navire.

La mesure de la pression de chacune des chambres 16 permet une évaluation des efforts auxquels sont soumis les paliers à la mer.

## Revendications

1. Propulseur en nacelle pour navire, comprenant une ligne d'arbre (2) supportée par un premier (5) et un deuxième (4) paliers, une hélice (3) montée à l'extrémité dudit arbre située du côté du premier palier, et des moyens d'entraînement (1) disposés pour entraîner la ligne d'arbre entre le premier et le deuxième paliers, **caractérisé par le fait que** ledit premier palier est un palier lisse biconique, hydrostatique au moins à faible vitesse.

2. Propulseur selon la revendication 1, dans lequel ledit premier palier est un palier biconique en "citron".

3. Propulseur selon la revendication 2, dans lequel ladite ligne d'arbre forme, dans la zone dudit premier palier, une partie (7) de diamètre élargi raccordée au reste de l'arbre par deux troncs de cône (8, 9) de sommets opposés, chaque tronc de cône étant agencé pour coopérer avec une butée (14, 13) de forme correspondante dans laquelle sont réalisés des alvéoles (16) formant chambres de pression, ouverts en regard des surfaces respectives de l'arbre, et raccordés à des moyens (17) de circulation de fluide hydraulique.

4. Propulseur selon la revendication précédente, dans lequel au moins une (14) des butées est réalisée en une pluralité de segments démontables.

5. Propulseur selon la revendication précédente, dans lequel lesdits segments sont maintenus assemblés à l'aide d'un flasque d'extrémité (12) d'un carter (11) de palier.

6. Propulseur selon l'une quelconque des revendications précédentes, dans lequel le deuxième palier est un palier lisse rotulé.

7. Propulseur selon la revendication précédente, dans lequel ledit deuxième palier est un palier hydrostatique au moins à faible vitesse.

8. Navire, **caractérisé par le fait qu'**il est muni d'au moins un propulseur selon l'une quelconque des revendications précédentes.

9. Navire selon la revendication précédente, dans lequel l'hélice est montée à l'arrière de la ligne d'arbre dans le sens de marche normal.

## Claims

1. Pod propulsion unit for ships comprising a shaft line (2) supported by a first (5) and a second (4) bearing, a screw propeller (3) mounted at the end of said shaft located on the side of the first bearing, and drive means (1) mounted to drive the shaft line between the first and the second bearings, **characterised in that** said first bearing is a biconical, plain bearing that is hydrostatic at least at low speed.

2. Propulsion unit according to claim 1, in which said first bearing is a "lemon-shaped" biconical bearing.

3. Propulsion unit according to claim 2, in which in the zone of said first bearing, said shaft line forms a section (7) of wider diameter connected to the rest of the shaft by two truncated cones (8, 9) with opposing vertices, wherein each truncated cone is arranged to cooperate with an abutment (14, 13) of corresponding form, in which are configured cells (16) forming pressure chambers that are open towards the respective surfaces of the shaft and connected to hydraulic fluid circulation means (17).

4. Propulsion unit according to the preceding claim, in which at least one (14) of the abutments is configured in a plurality of detachable segments.

5. Propulsion unit according to the preceding claim, in which said segments are held in assembled form by means of an end flange (12) of a bearing housing (11).

6. Propulsion unit according to any one of the preceding claims, in which the second bearing is a pivoting plain bearing.

7. Propulsion unit according to the preceding claim, in which said second bearing is a hydrostatic bearing at least at low speed.

8. Ship, **characterised in that** it is fitted with at least one propulsion unit according to any one of the preceding claims.

9. Ship according to the preceding claim, in which the screw propeller is mounted at the rear of the shaft line in the normal direction of travel.

## Patentansprüche

1. Verkleidetes Triebwerk für ein Schiff mit einem Wellenstrang (2), der in einem ersten (5) und einem zweiten (4) Lager gelagert ist, einer Schiffsschraube (3), die an dem auf der Seite des ersten Lagers befindlichen Ende der besagten Welle angebracht ist, und Antriebsmitteln (1), die angeordnet sind, um den Wellenstrang zwischen dem ersten und dem zweiten Lager anzutreiben, **dadurch gekennzeichnet, dass** das besagte erste Lager ein zumindest bei niedriger Drehzahl hydrostatisches, bikonisches Gleitlager ist.

2. Triebwerk nach Anspruch 1, bei dem das besagte erste Lager ein "zitronenförmiges" Doppelkegellager ist.

3. Triebwerk nach Anspruch 2, bei dem der besagte Wellenstrang im Bereich des besagten ersten Lagers einen Teil (7) mit erweitertem Durchmesser bildet, der sich an den Rest der Welle durch zwei Kegelstümpfe (8, 9) mit gegenüberliegenden Scheiteln anschließt, wobei jeder Kegelstumpf angeordnet ist, um mit einem entsprechend geformten Anschlag (14, 13) zusammenzuwirken, in welchen Druckkammern bildende Hohlräume (16) eingearbeitet sind, die gegenüber den jeweiligen Flächen der Welle offen sind und sich an Mittel (17) für die Zirkulation von Hydraulikflüssigkeit anschließen.

4. Triebwerk nach dem vorangehenden Anspruch, bei dem mindestens einer (14) der Anschläge in mehreren abnehmbaren Segmenten ausgeführt ist.

5. Triebwerk nach dem vorangehenden Anspruch, bei dem die besagten Segmente mit Hilfe eines Endflansches (12) eines Lagergehäuses (11) zusammengehalten werden.

6. Triebwerk nach einem der vorangehenden Ansprüche, bei dem das zweite Lager ein Pendelgleitlager ist.

7. Triebwerk nach dem vorangehenden Anspruch, bei dem das zweite Lager zumindest bei niedriger Drehzahl ein hydrostatisches Lager ist.

8. Schiff, **dadurch gekennzeichnet, dass** es mit mindestens einem Triebwerk nach einem der vorangehenden Ansprüche ausgerüstet ist.

9. Schiff nach dem vorangehenden Anspruch, bei dem die Schiffschraube in normaler Fahrtrichtung hinter dem Wellenstrang angebracht ist.
